# EUROPEAN PATENT APPLICATION

(11) **EP 3 163 402 A1**
(43) Date of publication of application: **03.05.2017**
(21) Application number: 15003110.2
(22) Date of filing: 30.10.2015
(51) Int. Cl.: G06F 3/01, G06F 21/36, G02B 27/01, G06F 21/34

(54) **METHOD FOR AUTHENTICATING AN HMD USER BY RADIAL MENU**

(71) Applicant: Giesecke & Devrient GmbH, 81677 München (DE)
(72) Inventor: Tea, Vui Huang, SE-12061 Stockholm (SE)

(57) **Abstract**

The present invention relates to a method for authenticating a user comprising mounting a virtual reality device (10) on the head of a user and displaying a selection screen comprising selectable elements (20). In order to perform the authentication, the user points his head towards the location of one (21) of the selectable elements (20).

## Description

### Technical Field

The present invention relates to a method for authenticating a user wearing a virtual reality device on his head. The virtual reality device may be any device capable of producing virtual three-dimensional images.

### State of the art

It is known to use virtual reality devices in order to play games, in which a user moves his head into the direction in to which he would like to move. A virtual character, for instance an Avatar, will than move in a virtual world or the like into the desired direction.

Virtual reality devices are also used to present new products, for instance automobiles, to a user or to carry out virtual museum tours.

A virtual reality device may be a set of glasses which is shielded from the outside. The set of glasses comprises two displaying devices; one for each eye.

In addition, just recently, a new trend has immerged according to which a user manually folds a cardboard fixture so that it is possible to mount a mobile phone (a smartphone or the like) in front of the head of a user. A set of convex lenses are arranged in the cardboard fixture and the set of convex lenses are placed in front of the eyes of a user so that each eye of a user may view one half of the smartphone screen. In combination with a suitable application, a user can use this arrangement to view virtual, three-dimensional images, movies, etc.

The arrangement has the drawback that, once the smartphones is mounted in the cardboard fixture/ support, the user cannot authenticate himself securely with two-factor authentication with respect to the mobile device, since the mobile device is fixed within the cardboard support and cannot easily be removed in order to perform a screen input, or interact with an external two-factor authentication device. It would be difficult or unnatural for the user to attempt a blind operation of the external two-factor authentication device.

For instance Universal 2nd Factor (U2F) is an open authentication standard that strengthens and simplifies two-factor authentication using specialized USB, NFC or Secure Element devices based on similar security technology found in smart cards.

### Summary of the invention

It is an object of the present invention to provide a method for authenticating a user solving the above problems and which is adapted to provide a user with means for authenticating himself while wearing a virtual reality device towards the virtual reality device, in particular a mobile device.

The general idea of the invention is based on the concept of the user entering a password or the like using head gestures. In other words, the invention aims at a hands-free, secure two-factor authentication using a Secure Element / SIM card.

The object is solved with a method for authenticating a user according to the subject matter of claim 1. Preferred alternative solutions are disclosed in the dependent claims.

According to the invention a method for authenticating a user comprises the mounting of a virtual reality device on the head of a user, the displaying of a selection screen comprising selectable elements with the virtual reality device, wherein the user performs the authentication by inputting information by pointing his head towards the location of one of the selectable elements, and by repeating the inputting of information until the authentication is completed.

Accordingly it is advantageously possible for a user to authenticate himself with respect to a virtual reality device without having to remove the virtual reality device from the mounted position, i.e. from the head of the user. Accordingly, it is possible for a user to experience a seamless usage of the mobile device, in particular of the virtual reality device, while, at the same time, being provided with a secure environment.

According to an embodiment of the invention the virtual reality device is adapted to present a virtual three-dimensional image to the user, in particular a steady and/or moving virtual three-dimensional image. Accordingly, the virtual reality device advantageously may be used for a variety of services.

According to another preferred embodiment of the invention, the virtual reality device comprises a mobile device, in particular a mobile phone, which is removably mounted in a fixture, wherein the fixture is adapted to be removably attached on the head of a user. Thus, it is possible to advantageously use a mobile device, such as a smartphone, and insert it into a fixture, for instance a fixture made of cardboard.

The inputted information by the user may advantageously comprise a password, in particular a PIN. Accordingly, the user of the mobile device is adapted to authenticate himself with respect to the mobile device without having to remove the mobile device from the fixture.

According to another preferred environment of the invention, the pointing of the head towards the location of at least one of the selectable elements comprises directing and/or turning the head towards the location of one of the selectable elements. Thus, it is easily possible for a user to perform an input by turning and/or directing his head towards the element to be selected and by keeping his head directed and/ or turned towards the location the selectable element until the selectable element has been selected after a predetermined amount of time. For instance, the selectable element can be marked as selected, for instance by being highlighted, after a predetermined amount of time or clicking an external/remote trigger /such as a button on the virtual reality headset or a Bluetooth device. Similarly, the element marked as selected can be marked as unselected, for instance by being highlighted, after a predetermined amount of time or clicking an external/remote trigger /such as a button on the VR headset or a Bluetooth device.

According to yet another embodiment, the selectable elements are arranged in a rectangular fashion and/or in a circular fashion, in particular in the manner of a rotary dial of a landline phone. By arranging the elements in either a rectangular fashion or a circular fashion, it is possible to start out in the middle of the rectangle or the circle and then move the head of the user towards one of the edges of the rectangle or the edge of the circle. Since the elements are arranged on the edge, it is easily possible for the user to point his head towards the location of one of the selectable elements. Crucially, it prevents the user from accidentally selecting an element. This could happen if the selectable elements were placed right in front of the user's view when the user's head is in a default / 'resting' position. E.g. in a numeric keypad layout (1-2-3, 4-5-6, 7-8-9, *-0-#), the user would frequently mark the elements '5' or '8' as selected while they are thinking/recalling their PIN number.

In order to analyze the pointing movements of the user, it is advantageous to provide the virtual reality device, in particular the mobile device, with a gyroscope sensor and/or an acceleration sensor.

According to another embodiment, the inputted information enables a secure two factor authentication, in particular a secure authentication with a secure element, a SIM (subscriber identity modul) and/or an eUICC (embedded universal circuit card). Moreover, the information can also be used to authorize a transaction or to enter a "secret" portion of an application.

### Brief description of the drawing

- Fig. 1: shows a fixture for mounting a virtual reality device,
- Fig. 2: shows a selection screen comprising selectable elements,
- Fig. 3: shows another example of a selection screen, and
- Fig. 4: shows the basic steps of a method according to the invention.

### Description of the embodiments

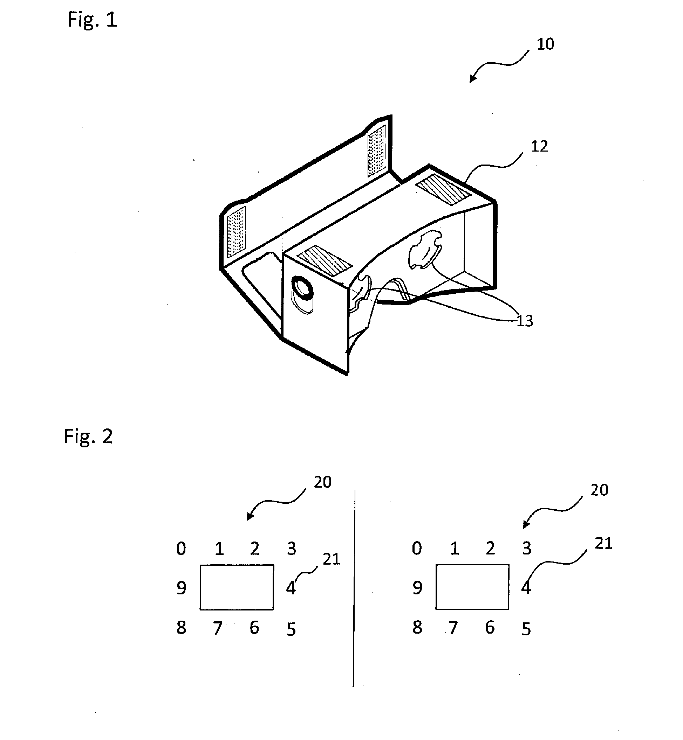

The following exemplary embodiments of the invention will be described with reference to Figs. 1-4.

Fig. 1 shows a virtual reality device 10 comprising a fixture 12 for mounting a mobile device (not shown), such as a mobile phone, a smartphone, a tablet-PC, etc.

In the embodiment shown, the virtual reality device 10 is a fixture 12 made of cardboard. The fixture 12 can be mounted in front of the head, in particular in front of the eyes, of a user. Located approximately in front of each eye is a convex lens 13. Together with a suitable application on the mobile device, in particular the smartphone, the fixture 12 enables a user using the stereoscopy technique to create or enhance the illusion of depth in an image by means of stereopsis for binocular vision.

In an alternative configuration the virtual reality device 10 is also known as virtual reality glasses/googles. Such a device 10 is an all-in-one-solution, in which the fixture 12 and the mobile device are integrated into one unit.

The virtual reality device 10 has the drawback that a user intending to authenticate himself with respect to the virtual reality device 10, in particular with respect to the mobile device, has, when using the all-in-one-device, no possibility of performing an authentication unless he uses a keyboard connected to mobile device, or, when using a mobile device, such as a smartphone, he has to remove the smartphone from the fixture 12 in order to authenticate himself, by inputting a PIN code or the like using his fingers or an input devices, such as a stick.

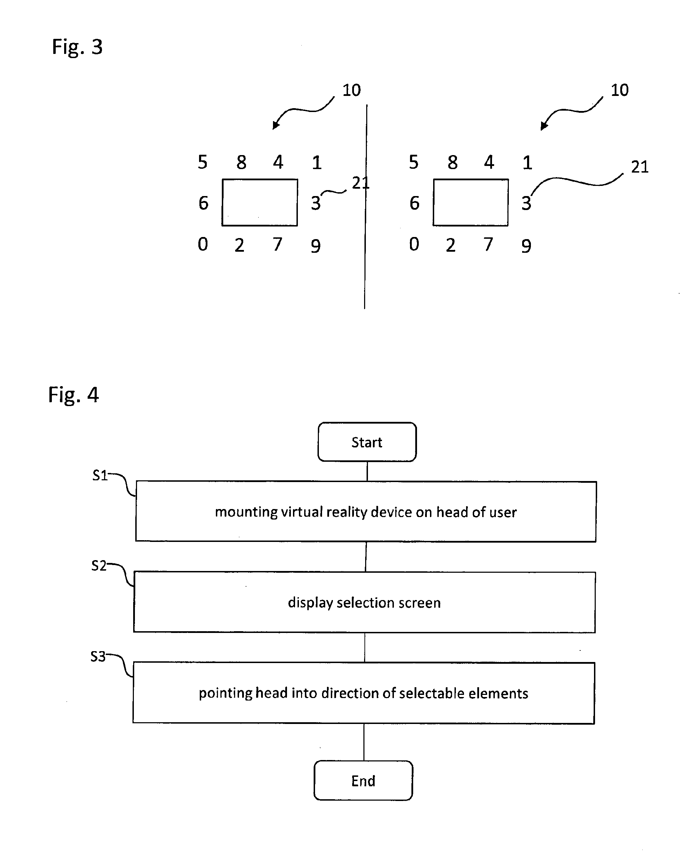

According to the invention, a user is now able to use the virtual reality device 10 to perform an authentication. The authentication is performed by displaying, on the display of the virtual reality device, in particular on the display of the mobile device, a plurality of numbers, in particular the numbers from "0 to 9". The numbers construe selectable elements 20. The user may input information by pointing his head towards the location of one 21 of the selectable elements 20. As shown, for instance in Fig. 2 and 3, the user will, for instance, point his head by turning rightwards and rest in the rightward position for predetermined amount of time, in order to select the number 4 (Fig. 2) or 3 (Fig. 3). In Fig. 2 and 3, the whole content of the display of a mobile device screen is shown. The display screen is split, in order to be able to use the stereoscopy effects.

In order to increase the safety of the input of information, the order of the displayed numbers may be randomized (Fig. 3). Accordingly, a third person standing next to the user wearing the virtual reality device 10 on his head, may not guess the inputted information by memorizing the locations into which the user pointed his head.

While moving/ pointing his head toward the location of one 21 of the selectable elements 20, the numbers may also move a little in order to indicate to the user that the virtual reality device 10 is aware of the head movement of the user. The indication may also take the form of color change, number flashing, various animation, pop-up/overlay notifications, audio cues (a sound effect, or even a voice reading out the numbers to the user's headphone), vibration etc.

The selectable elements 20 can also be arranged in a different fashion, for instance the selectable elements may not only be arranged in a rectangular / polygonal fashion, as shown in Fig. 2 and 3, but also in a circular fashion, in particular in the manner of a rotary dial of a standard landline phone.

The PIN/code/information entered virtually by the user on the virtual reality device 10 is sent to the SIM Applet hybrid Authenticator according toGSMA Mobile Connect annex D and similarly to FIDO U2F or other comparable systems. The SIM Applet hybrid Authenticator generates the cryptographic evidence necessary to perform the secure two-factor authentication. The evidence can be sent back to a virtual reality application on the virtual reality device 10, or directly to the application/ service provider's server. On verification of the evidence, the user will be allowed to proceed with their desired action in the virtual reality world. For example, explore a new section, view premium content, order a real-world product/service etc. If Mobile Connect Level of assurance LoA4 (PKI) is used, the evidence can even be legal non-repudiation digital signature.

According to the invention, the method for authenticating a user comprises the step of mounting a virtual reality device 10 on the head of a user (step S1). After the virtual reality device is mounted of on the head of a user, a selection screen, as shown in Fig. 2 and 3, may be presented to the user (step S2). In order to authenticate himself, the user has to point his head into the direction of one 21 of the selectable elements 20 displayed to the user (step S3). The user may repeat the step of pointing his head (step S3) until the information is completely entered.

## Claims

1. Method for authenticating a user, comprising the steps:
- mounting a virtual reality device (10) on the head of a user,
- displaying a selection screen (20) comprising selectable elements (21), wherein the user performs the authentication
a) by inputting information by pointing his head towards the location of one of the selectable elements (21), and
b) by repeating the inputting of information until the authentication is completed.

2. Method according to claim 1, wherein the virtual reality device (10) is adapted to present a virtual three-dimensional image to the user.

3. Method according to claim 1 or 2, wherein the virtual reality device (10) comprises a mobile device, in particular a mobile phone, which is removably mounted in a fixture, wherein the fixture is adapted to be removably attached on the head of a user.

4. Method according to one of the preceding claims, wherein the information comprises a password, in particular a PIN.

5. Method according to one of the preceding claims, wherein the pointing of the head towards to location of one of the selectable elements (21) comprises directing and/ or turning the head towards the location of one of the selectable elements (21).

6. Method according to one of the preceding claims, wherein the selectable elements (21) are arranged in a rectangular fashion and/or a circular fashion, in particular in the manner of a rotary dial.

7. Method according to one of the preceding claims, wherein the virtual reality device (10) is provided with a gyroscope sensor and/or an acceleration sensor, or other means of determining the device's (10) 3D rotational, directional and angular position and planar translation

8. Method according to one of the preceding claims, wherein the inputted information enables a secure two factor authentication, in particular a secure authentication with a secure element, a SIM and/or an eUICC.
